# EUROPEAN PATENT SPECIFICATION

(11) **EP 0 883 457 B1**
(45) Date of publication and mention of the grant of the patent: **02.05.2003**
(21) Application number: 97906398.9
(22) Date of filing: 26.02.1997
(51) Int. Cl.: B23C 5/06

(54) **Milling cutter body**
Fräserkörper
Corps du fraisage

(30) Priority: 28.02.1996 SE 9600757
(43) Date of publication of application: 16.12.1998
(73) Proprietor: SANDVIK AKTIEBOLAG, 811 81 Sandviken (SE)
(72) Inventor: SVENSSON, Sven, S-811 33 Sandviken (SE)
(86) International application number: PCT/SE97/00337
(87) International publication number: WO 97/031744

(56) References cited:
- EP-A- 0 362 505
- DE-C- 674 112
- DE-C- 3 943 548
- SE-B- 308 055
- US-A- 5 199 827

## Description

The present invention relates to a milling cutter body with cutting inserts.

At milling cutter tools with detachably clamped cutting inserts, it has often turned out to be difficult to position the inserts with the required precision, so that a good surface smoothness on the workpiece is achieved, and a long tool life. In order to attain the required surface smoothness, it is required that the cutting inserts attain the most exact position as possible, in particular in the axial direction. If the axial positioning is unsatisfactory, then an axial play arises, which results in a deteriorated surface smoothness. On the other hand, performed test series have shown that the best surfaces are obtained if the surface is generated by one sole insert, which then is somewhat protruding axially in relation with the other inserts.

For commercially available milling cutters the axial play, i.e., the maximal axial distance between the operative parallel land cutting edges of two individual cutting edges, may for instance be around 30 µm. However, since this play is purely at random, more than one cutting insert may protrude axially relative to the other cutting edges. If then two protruding cutting inserts become located after each other in the milling cutter body, there is a risk that the second cutting insert does not cut a proper chip under the parallel land, but instead only scratches the surface in an undesired way.

The milling cutter bodies of today are usually constructed with a positive axial angle and a negative radial angle. A representative example of this is shown in US-A-5 199 827. This has been found to result in a favourable chip breaking by the fact that the chips are directed outwards, away from the milling cutter body, and upwards, away from the workpiece. Over the years, this positive/negative basic geometry has established its position as the generally most useful. DE-C-3943548 teaches a milling cutter body comprising a plurality of cutting insert seats each of which accommodates a cutting insert and a shim, the cutting inserts being positioned with a positive axial angle. It further teaches that the axial projection of the cutting inserts can be increased by the use of inserts with a different shape from the others.

Thus, a primary object of the present invention is to improve milling cutter bodies with said positive/negative basic geometry with regard to the obtained surface on the workpiece.

A further object of the present invention is to improve the surface on the workpiece independently of the radial angle of the cutting inserts.

Still another object is to, having regard to the fact that it has been found benificial that a cutting insert is axially more protruding than the other ones, in a simple way position one of the cutting inserts in the milling cutter body axially before the others.

These and further objects have been solved in a surprisingly simple way by a milling cutter body according to claim 1 or claim 4.

For illustrative but non limiting purposes, the invention will now be further described with reference to the appended drawings. These are herewith briefly presented:

Figure 1 shows a milling cutter body in a perspective view obliquely from above, which has been equipped in accordance to an embodiment of the present invention.

Figure 2 shows an exploded view of an insert seat in perspective, obliquely from above.

Figures 3 and 4 show basic drawings of an insert seat, the milling cutter body *per se* being shown sectionally.

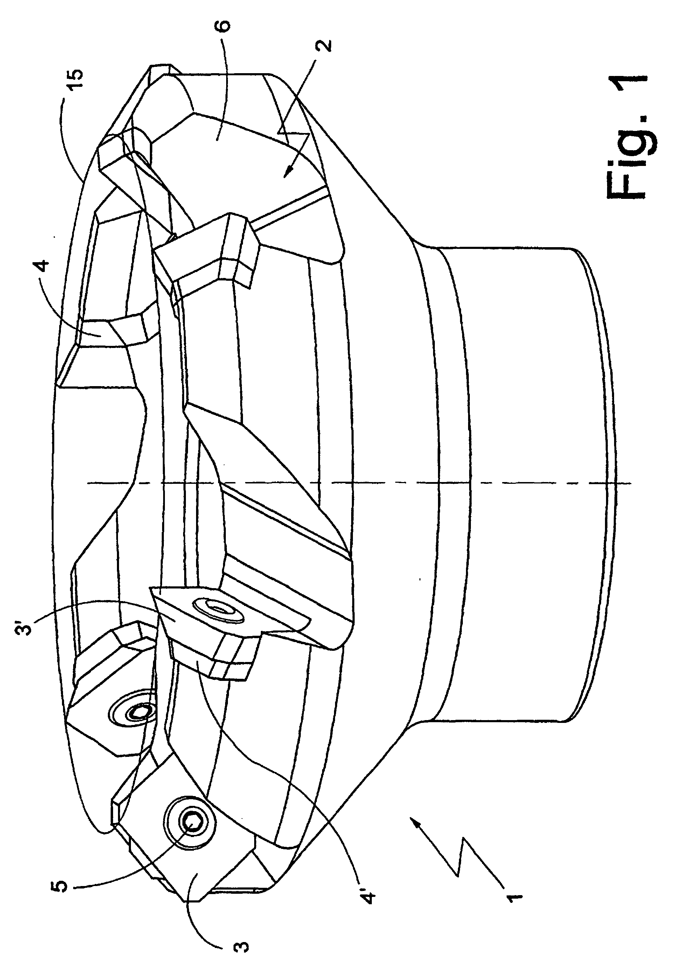

Figure 1 shows generally a milling cutter body 1 with six insert seats 2, all according to prior art. In each insert seat there is a mounted cutting insert 3 and a shim 4, which have been fastened in the insert seat by means of a locking screw 5. In front of each insert, in the direction of rotation, there is a milled-out chip pocket 6.

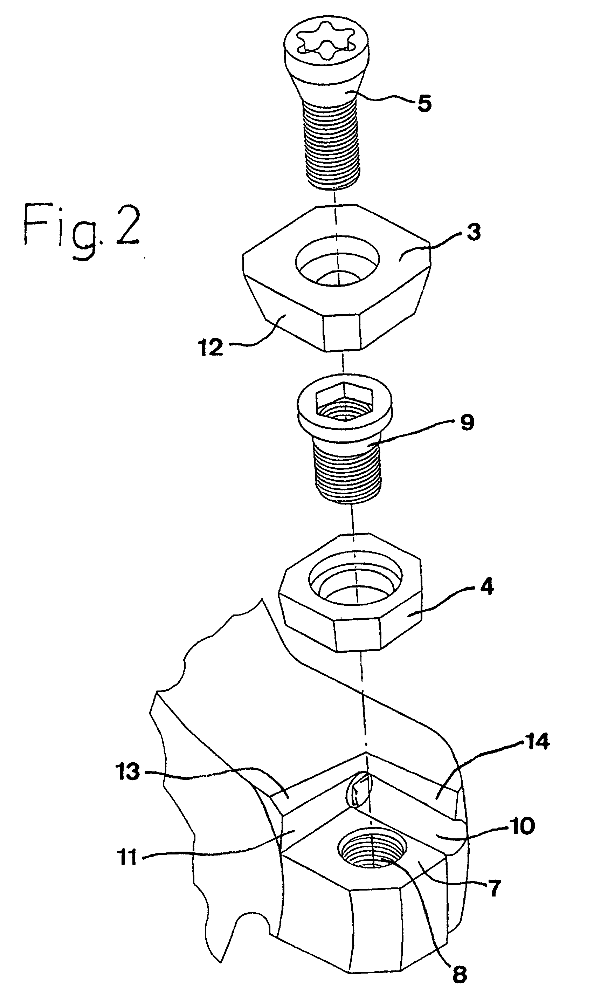

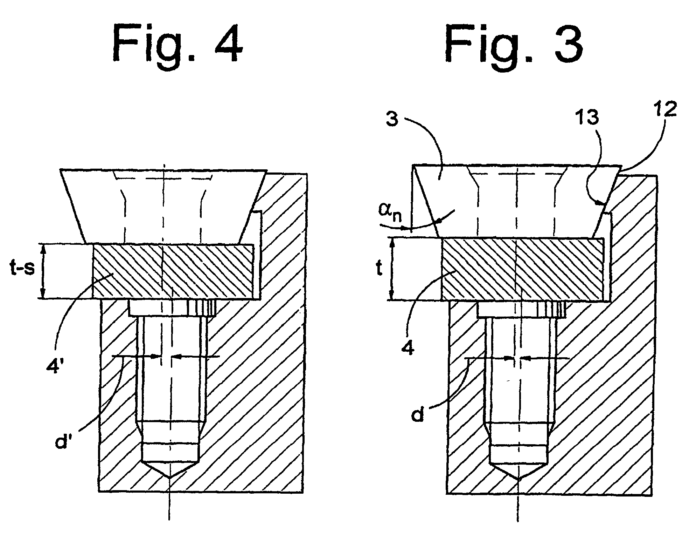

The mounting *per se* of a cutting insert may be clearly seen in figure 2. An insert seat usually comprises a bottom support surface 7 with a threaded hole 8 intended for the threading of a shim screw 9. The head of the shim screw clamps a shim 4. Normally, this support shim does not bear on side surfaces 10 and 11, which are thus free surfaces. Above the shim 4 is fastened a cutting insert 3, e.g., a square indexable insert, by means of a locking screw 5, which is threaded into the internal thread of the shim screw 9. Two of the side surfaces 12 of the cutting insert abut against the support surfaces 13 and 14, respectively, in the insert seat. These are angled in order to correspond to the positivity of the side surfaces 12. This positivity is expressed by means of the insert-inherent relief angle αₙ, see figure 3.

As mentioned above, the milling cutter body in figure 1, as well as the insert seat in figure 2, represent the prior art for milling cutter bodies with a positive axial angle and a negative radial angle. The new issue of the present invention is how such a known milling cutter body is equipped. Thus, the characteristic feature of the present invention consists in that a shim 4' is thinner than the other shims 4, which have substantially the same thickness **t**. By the fact that the cutting insert is positive, i.e., the side or relief surfaces 12 have an acute angle to the upper or chip surface of the insert and an obtuse angle to the bottom surface of the insert, and that the inserts are angled axially positively in the holder as such, a thinner shim brings about that specifically that insert takes up an axially more protruding position than the other inserts. Thus, the increased axial projection depends on one hand on the fact that the axial and radial support surfaces end up higher on the cutting insert (positive cutting insert) and on the other hand on the fact that a positive axial angle results in that the projection increases when the cutting insert is located deeper down in the insert seat. In figure 1 the plane of rotation of the operative cutting corners, whose appurtenant shims have the same thickness, are illustrated by a ring 15. The operative insert comer of the sixth cutting insert 3' is situated above this plane, which for sake of illustration has been exaggerated in figure 1.

Figure 3 shows an insert seat with a cutting insert 3 and a shim 4, whose thickness is t. The side surface 12 of the insert bears against the support surface 13 of the insert seat.

Figure 4 shows the same insert seat as figure 3, however with the sole difference that the shim 4' is thinner than t by a distance **a**; thus the thickness of the plate 4' is t-s. This difference of thicknesses s gives an axial projection h of the insert 4' according to the following relation (I): 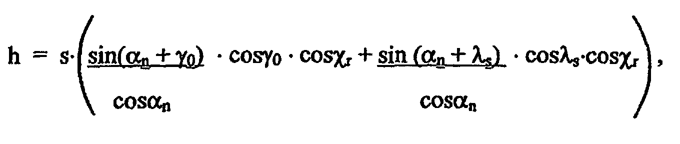 where
αₙ = the insert-inherent clearance angle,
γ₀ = the rake angle,
χᵣ = the setting angle, and
λₛ = the inclination angle.

All used terms are according to ISO standard 3002/1-1982.

With an inclination angle λₛ of 23°, a clearance angle αₙ of 20°, a rake angle γ₀ of 7,9° and a setting angle χᵣ of 45,6°, the obtained axial dislocation was measured at a number of thicknesses of the thinner shim. The other shims have a thickness of 3,00 mm. The factually measured h values for different s values are given below:

| s value in mm | h value in mm |
|---|---|
| 0,03 | 0,038 |
| 0,07 | 0,063 |
| 0,10 | 0,090 |
| 0,15 | 0,133 |
| 0,20 | 0,184 |

Because of manufacturing tolerances, these values do not fully correspond to the theoretical relation (I), but anyway the correlation may be clearly seen.

As may be seen from the h values above, there is a possibility to obtain a controlled axial play for one of the cutting inserts, while the other inserts have a considerably smaller mutual play, for instance in the order of magnitude 10 µm. Examples of milling cutter bodies where such small axial plays are achieved are described in, e.g., the Swedish patent applications 9502645-6 and 9504688-4, but as such, the invention is generally applicable for all known milling cutter bodies with a positive axial inclination and a limited play of the other cutting inserts. This internal maximal play for the other inserts should suitably lie below 30 µm, preferably below 20 µm and in particular below 10 µm. Thus, by the fact that the other cutting inserts have a small axial play, it is guaranteed that only the insert with a thinner shim protrudes axially and produces the endeavoured, smoother surface. Tests have shown that the cutting insert that generates the surface should protrude downwards by 20 to 80 µm below the other inserts in the milling cutter body, preferably between 30 and 70 µm and in particular between 40 and 60 µm. The measure s for the thinner shim 4' is suitably between 20 and 150 µm, preferably between 40 and 100 µm.

Also radially, the projection increases somewhat for a thinner shim. However, here the values are smaller than for the axial projection and do not cause any noticeable wear of specifically that insert in comparison with the other inserts. Furthermore, an increased radial projection is counteracted by a negative radial angle. However, also a positive radial angle *per se* does not influence the function according to the invention..

By the thinner shim, of course the preset tension increases somewhat in the screw 5, compare the distances d and d' in figures 3 and 4. However, the increase of the preset tension is negligeable and standard screws may be used without any problem.

In order to avoid a mistake between the thinner shim 4' and the "normal" shims 4, the shims 4' should be distinguished in some way. They may for instance be colour-marked, such as by a particular surface coating. Equally to the cutting inserts, the shims are usually also made of cemented carbide.

Finally is should be pointed out that the inventor has certainly also considered the possibility of manufacturing one of the inserts somewhat thinner, instead of the shim. Although this constitutes a less preferred embodiment, it is within the framework of the present invention.

## Claims

1. Milling cutter body comprising a plurality of cutting insert seats, of which each of said seats accomodates a cutting insert (3, 3') and also a shim (4, 4'), the cutting inserts being oriented in the direction of rotation of the cutter body, are provided with a side face having an acute angle to the upper surface of the insert whereby the cutting inserts abut with said side surfaces against respectively inclined support surfaces of the insert seats and the inserts being positioned with a positive axial angle, ***characterized in that*** a shim (4') is somewhat thinner than the other shims in order to thereby increase the axial projection of the cutting insert in question.

2. Milling cutter body according to claim 1, ***characterized in that*** the thinner shim is between 20 and 150 µm thinner than the other shims (4).

3. Milling cutter body according to any of the preceding claims, ***characterized in that*** the cutting inserts are positioned with a negative radial angle.

4. Milling cutter body comprising a plurality of cutting insert seats, of which each of said seats accomodates a cutting insert (3,3') and possibly also a shim (4,4'), the cutting inserts being oriented in the direction of rotation of the cutter body, are provided with a side face having an acute angle to the upper surface of the insert whereby the cutting inserts abut with said side surfaces against respectively inclined support surfaces of the insert seats and the inserts being positioned with a positive axial angle, ***characterized in that*** a cutting insert is somewhat thinner than the other cutting inserts whereby this cutting insert protrudes in the axial direction of the cutter body in respect to the other cutting inserts.

5. Milling cutter body according to claim 4, ***characterized in that*** the thinner insert is between 20 and 150 µm thinner than the other inserts.

6. Milling cutter body according to any of the preceding claims, ***characterized in that*** the cutting inserts are positioned with a negative radial angle.

## Patentansprüche

1. Fräserkörper mit einer Vielzahl von Schneideinsatzsitzen, deren jeder einen Schneideinsatz (3, 3') und auch ein Abstandsstück (4, 4') aufnimmt, wobei die Schneideinsätze in der Drehrichtung des Schneidkörpers ausgerichtet sind, mit einer Seitenfläche versehen sind, die einen spitzen Winkel zur oberen Seite des Einsatzes hat, wodurch die Schneideinsätze mit den Seitenoberflächen gegen entsprechend geneigte Stützoberflächen der Einsatzsitze in Widerlage kommen, und die Einsätze mit einem positiven Axialwinkel angeordnet sind, **dadurch gekennzeichnet, daß** ein Abstandsstück (4') etwas dünner ist als die anderen Abstandsstücke, um dadurch den axialen Vorstand des in Rede stehenden Schneideinsatzes zu erhöhen.

2. Fräserkörper nach Anspruch 1, **dadurch gekennzeichnet, daß** das dünnere Abstandsstück zwischen 20 und 150 µm dünner ist als die anderen Abstandsstücke (4):

3. Fräserkörper nach einem der vorhergehenden Ansprüche, **dadurch gekennzeichnet, daß** die Schneideinsätze mit einem negativen Radialwinkel positioniert sind.

4. Fräserkörper mit einer Vielzahl von Schneideinsatzsitzen, deren jeder einen Schneideinsatz (3, 3') und möglicherweise auch ein Abstandsstück (4, 4') aufnimmt, die Schneideinsätze in der Drehrichtung des Schneidkörpers ausgerichtet sind, mit einer Seitenfläche versehen sind, die einen spitzen Winkel zu der oberen Fläche des Einsatzes hat, wodurch die Schneideinsätze mit den Seitenoberflächen gegen entsprechend geneigte Stützoberflächen der Einsatzsitze in Widerlage kommen, und die Einsätze mit einem positiven Axialwinkel angeordnet sind, **dadurch gekennzeichnet, daß** ein Schneideinsatz etwas dünner ist als die anderen Schneideinsätze, wodurch dieser Schneideinsatz in der axialen Richtung des Schneidkörpers bezüglich der anderen Schneideinsätze vorsteht.

5. Fräserkörper nach Anspruch 4, **dadurch gekennzeichnet, daß** der dünnere Einsatz zwischen 20 und 150 µm dünner ist als die anderen Einsätze.

6. Fräserkörper nach einem der vorhergehenden Ansprüche, **dadurch gekennzeichnet, daß** die Schneideinsätze mit einem negativen Radialwinkel positioniert sind.

## Revendications

1. Corps de fraisage comprenant une pluralité de sièges de plaquette amovible, dont chacun desdits sièges reçoit une plaquette amovible (3,3') et une cale (4,4'), les plaquettes étant orientées dans le sens de rotation du corps de fraisage, ayant une face latérale accusant un angle aigu avec la face supérieure, prenant appui par lesdites surfaces latérales contre les surfaces d'appui respectives des sièges de plaquette, et étant mises en position avec un angle axial positif, **caractérisée en ce qu'**une cale (4') est légèrement plus mince que les autres cales, afin d'accroître par ce moyen le dépassement axial de la plaquette en question.

2. Corps de fraisage selon la revendication 1, **caractérisé en ce que** la cale plus mince est plus mince que les autres cales (4) à raison de 20 à 150 µm.

3. Corps de fraisage selon l'une quelconque des revendications précédentes, **caractérisé en ce que** les plaquettes amovibles y sont positionnées avec un angle radial négatif.

4. Corps de fraisage comprenant une pluralité de sièges de plaquette amovible, dont chacun desdits sièges reçoit une plaquette amovible (3,3') et une cale (4,4'), les plaquettes étant orientées dans le sens de rotation du corps de fraisage, ayant une face latérale accusant un angle aigu avec la face supérieure, prenant appui par lesdites surfaces latérales contre les surfaces d'appui respectives des sièges de plaquette, et étant mises en position avec un angle axial positif, **caractérisé en ce qu'**une plaquette amovible est légèrement plus mince que les autres plaquettes amovibles, moyennant quoi cette plaquette est en dépassement par rapport aux autres plaquettes dans l'axe de la fraise.

5. Corps de fraisage selon la revendication 4, **caractérisé en ce que** la plaquette plus mince est plus mince que les autres à raison de 20 à 150 µm.

6. Corps de fraisage selon l'une quelconque des revendications précédentes, **caractérisé en ce que** les plaquettes amovibles y sont positionnées avec un angle radial négatif.
